Europäisches Patentamt

European Patent Office

Office européen des brevets

(19)

(11) Veröffentlichungsnummer: **0 155 442**
**B1**

(12) # EUROPÄISCHE PATENTSCHRIFT

(45) Veröffentlichungstag der Patentschrift:
**12.04.89**

(51) Int. Cl.⁴: **F 16 N 39/04, B 01 D 35/18**

(21) Anmeldenummer: **84890254.0**

(22) Anmeldetag: **21.12.84**

(54) Vorrichtung zur Beseitigung von Wasser und/oder anderen flüchtigen Verunreinigungen aus Schmierölen.

(30) Priorität: **21.12.83 AT 4464/83**

(43) Veröffentlichungstag der Anmeldung:
**25.09.85 Patentblatt 85/39**

(45) Bekanntmachung des Hinweises auf die Patenterteilung:
**12.04.89 Patentblatt 89/15**

(84) Benannte Vertragsstaaten:
**CH DE FR GB IT LI NL SE**

(56) Entgegenhaltungen:
**AU-B- 508 074**
**GB-A- 2 008 420**
**US-A- 2 979 160**

(73) Patentinhaber: **Van der Meulen, Alfred,**
**Eisenaustrasse 42, A-5310 Mondsee (AT)**

(72) Erfinder: **Van der Meulen, Alfred, Eisenaustrasse 42,**
**A-5310 Mondsee (AT)**

(74) Vertreter: **Boeckmann, Peter, Dipl.-Ing. et al,**
**Patentanwälte Dipl.-Ing. Peter Boeckmann, Dipl.-Ing.**
**Leo Brauneiss Strohgasse 10, A-1030 Wien (AT)**

## Beschreibung

Die Erfindung betrifft eine Vorrichtung zur Beseitigung von Wasser und/oder anderen flüchtigen Verunreinigungen aus Schmierölen für Brennkraftmaschinen mit einer in einen Raum mit einem Filtereinsatz mündenden Einlaßöffnung für das zu reinigende Schmieröl, welches nach dem Hindurchströmen durch den Filtereinsatz in eine beheizte Verdampfungskammer geleitet wird, die eine Auslaßöffnung für das gereinigte Schmieröl sowie eine weitere Austrittsöffnung für die bei der Verdampfung entstehenden Gase aufweist, welche weitere Austrittsöffnung über eine Leitung mit einer Vakuumeinrichtung in Vebindung steht.

Es ist bekannt, daß die Verunreinigungen in Schmierölen beispielsweise bei Brennkraftmaschinen einen erhöhten Verschleiß und eine Verringerung des Wirkungsgrades dieser Maschinen bewirken. Feste Verunreinigungen, wie Schmutz, Metallteilchen od.dgl. können auf einfache Weise durch übliche Filtereinsätze, beispielsweise aus Fasermaterial, beseitigt werden, durch welche das Schmieröl hindurchgeführt wird, wobei die festen Bestandteile zurückgehalten werden. Schmieröle weisen aber auch Wasser und andere flüchtige Verunreinigungen auf, welche gleichfalls beispielsweise dadurch, daß sie eine Säure bilden und die Kolben- und Zylinderwände angreifen, einen erhöhten Verschleiß der Brennkraftmaschinen mit sich bringen. Um auch diese flüssigen und flüchtigen Verunreinigungen aus den Schmierölen zu beseitigen, hat man bereits vorgeschlagen (AU-B-508074), das zu reinigende Schmieröl in eine beheizte Verdampfungskammer einzuleiten, wo das Schmieröl auf einer großen Oberfläche verteilt und gleichzeitig erwärmt wird, so daß eine Verdampfung der zu beseitigenden flüssigen oder flüchtigen Verunreinigungen erfolgt. Die bei dieser Verdampfung entstehenden Gase entweichen bei der bekannten Vorrichtung über eine Austrittsöffnung in die Atmosphäre, das gereinigte Schmieröl wird der Wiederverwendung zugeführt, also beispielsweise der Ölwanne der Brennkraftmaschine zugeleitet.

Um eine vollständige Beseitigung der flüssigen oder flüchtigen Verunreinigungen zu erzielen, ist es erforderlich, daß alle zu beseitigenden Verunreinigungen in der Verdampfungskammer verdampfen. Eine solche vollständige Verdampfung erfordert eine große Ausbreitungsfläche für das Öl sowie eine hohe Verdampfungstemperatur. Die Ausbreitungsfläche für das Öl ist jedoch durch die Größe der Vorrichtung begrenzt, welche aus Platzgründen nicht unbeschränkt groß gemacht werden kann. Zu hohe Verdampfungstemperaturen bewirken eine Zerstörung des Schmieröles.

Aus der erwähnten AU-B-508 074 ist es auch bekannt, die Austrittsöffnung der beheizten Verdampfungskammer über eine Leitung mit dem Ansaugtrakt der Brennkraftmaschine zu verbinden, so daß, da beim Ansaugen ein Unterdruck entsteht, auch in der Verdampfungskammer während des Ansaugvorganges ein Unterdruck aufrechterhalten wird. Auch mit dieser bekannten Vorrichtung gelingt es jedoch nicht, eine vollständige Beseitigung auch der flüssigen und flüchtigen Verunreinigungen des Schmieröles zu bewirken, da diese bekannte Vorrichtung nicht gewährleistet, daß in der Verdampfungskammer stets ein Unterdruck in der erforderlichen Größe vorhanden ist.

Die vorliegende Erfindung hat sich zur Aufgabe gestellt, die erwähnten Nachteile zu beseitigen und eine Vorrichtung zur Beseitigung von Wasser und/oder anderen flüchtigen Verunreinigungen aus Schmierölen für Brennkraftmaschinen zu schaffen, bei welcher ohne Volumsvergrößerung der Vorrichtung, ohne unzulässige Temperaturerhöhung des Schmieröles und mit geringem Energieaufwand eine praktisch vollständige Beseitigung dieser Verunreinigungen gewährleistet ist.

Die Lösung der gestellten Aufgabe besteht darin, daß die Einlaßöffnung für das zu reinigende Schmieröl mit einer Rohrleitung in Verbindung steht, die in einer die Verdampfungskammer begrenzenden Wand und/oder unmittelbar in der Verdampfungskammer vorgesehen ist, so daß das von der Brennkraftmaschine zurückströmende heiße, zu reinigende Schmieröl vor dem Eintreten in den den Filtereinsatz enthaltenden Raum durch die Rohrleitung strömt. Während bei den bekannten Ausführungen bisher in der Regel die Beheizung der Verdampfungskammer über elektrische Heizspiralen erfolgt, denen somit elektrische Fremdenergie zugeführt werden muß, erfolgt bei dieser erfindungsgemäßen Ausführungsform die Beheizung der Verdampfungskammer zumindest überwiegend dadurch, daß das bei der Schmierung der Brennkraftmaschine erwärmte und ohnedies abzukühlende Schmieröl während des Durchfließens durch diese Rohrleitung zumindest einen Großteil seiner Wärme an die Verdampfungskammer abgibt, so daß es in der Regel nicht mehr erforderlich ist, diese Verdampfungskammer mit Fremdenergie zu beheizen, oder zumindest eine wesentlich verringerte Beheizung der Verdampfungskammer durch Fremdenergie erforderlich ist.

Zweckmäßig ist es hiebei, wenn die Rohrleitung in Form einer Spirale ausgebildet ist, so daß der Weg, den das Schmieröl bei der Aufheizung der Verdampfungskammer durchfließt, groß ist, und daher auch ein Großteil der Wärmeenergie des Schmieröles abgegeben wird.

Ist die Rohrleitung direkt in der Verdampfungskammer angeordnet, so wird die Wärmeenergie unmittelbar über die Wand der Rohrleitung abgegeben. Wie erwähnt, ist es aber auch möglich, die Rohrleitung in einer die Verdampfungskammer begrenzenden Wand vorzusehen. In diesem Fall ist es von Vorteil, wenn erfindungsgemäß die Rohrleitung in einem die Verdampfungskammer begrenzenden, aus zwei Teilen bestehenden Deckel angeordnet ist, wobei die Trennfuge zwischen den beiden Teilen etwa durch die Mittellinie der Rohrleitung verläuft, also die gesamte Rohrleitung in zwei Hälften teilt, wobei in dieser Trennfuge ein mechanischer Filter, vorzugsweise ein Filtersieb, angeordnet ist. Mit diesem Filtersieb kann die bereits erwähnte mechanische Filterung des Schmieröles vorgenommen werden, wenn die Zufuhr des Schmieröles am einen Ende der Rohrleitung in der einen Hälfte derselben und die Abfuhr des Schmieröles am anderen Ende der Rohrleitung in der anderen Hälfte erfolgt. Das derart vorgefilterte Schmieröl kann dann in einen Hauptstrom und in einen Nebenstrom unterteilt werden, wobei der Hauptstrom unmittelbar zu den Schmierstellen zurückgeführt wird, wogegen das Schmieröl im Nebenstrom vor der Rückführung von flüssigen und flüchtigen Verunreinigungen befreit wird.

Um zu verhindern, daß kondensiertes Wasser über die mit der weiteren Austrittsöffnung verbundene Leitung der Brennkraftmaschine bzw. dem vorgeschalteten Turbolader zugeführt wird, was beispielsweise zu einer Zerstörung des Turboladers führen könnte, ist zweckmäßig gemäß einem weiteren Merkmal der Erfindung in die mit der Austrittsöffnung verbundene Leitung ein Wasserabscheider eingeschaltet.

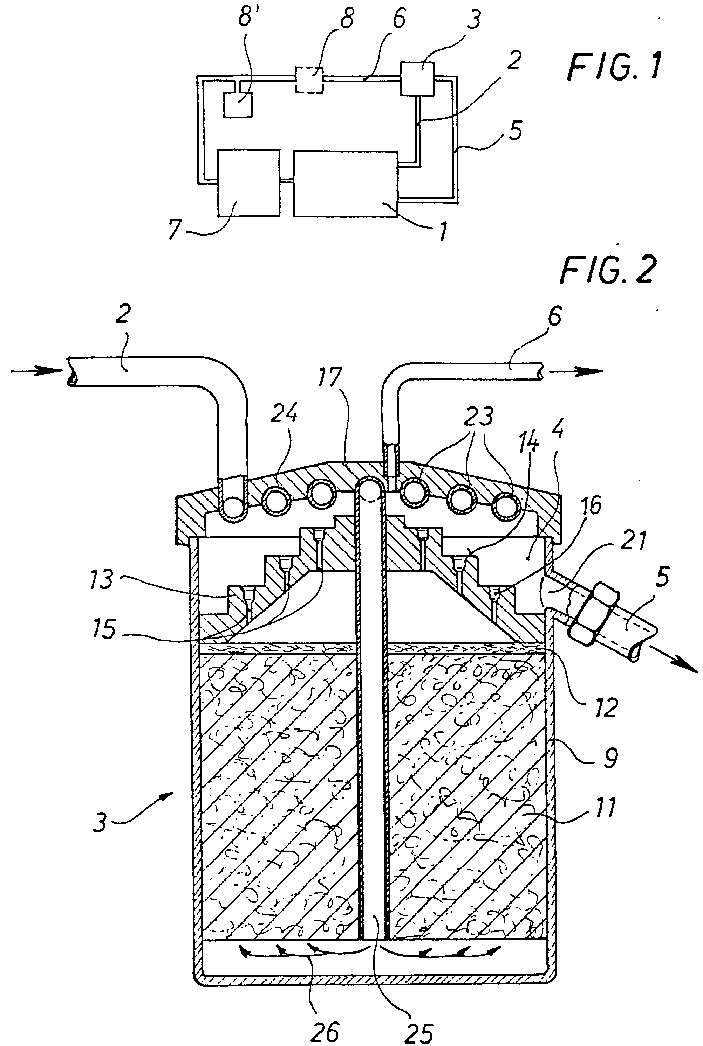

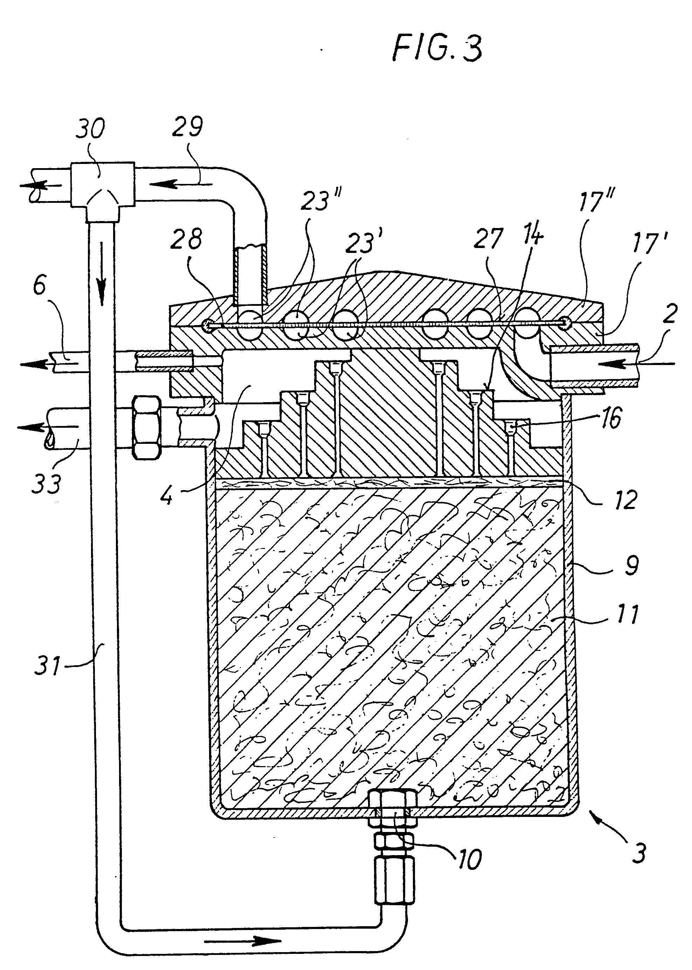

In der Zeichnung ist die Erfindung an Hand von Ausführungsbeispielen schematisch veranschaulicht. An Hand von Fig. 1 wird das Prinzip der erfindungsgemäßen Vorrichtung erläutert, Fig. 2 zeigt eine erfindungsgemäße Vorrichtung im Schnitt. Fig. 3 zeigt eine weitere Ausführungsform der erfindungsgemäßen Vorrichtung in einer der Fig. 2 entsprechenden Darstellung.

Wie aus Fig. 1 hervorgeht, wird zumindest ein Teil des zu reinigenden Schmieröles von einer schematisch dargestellten Brennkraftmaschine 1 über eine Leitung 2 einer Vorrichtung 3 mit einer Verdampfungskammer 4 (siehe Fig. 2 und 3) zugeführt, wo die flüssigen und flüchtigen Verunreinigungen des Schmieröles verdampfen. Das gereinigte Schmieröl wird über eine Leitung 5 zur Ölwanne der Brennkraftmaschine 1 zurückgeleitet. Von dieser Verdampfungskammer 4 führt eine Leitung 6 zum Luftansaugstutzen eines Abgasturboladers 7 für die Brennkraftmaschine 1. In die Leitung 6 kann eine Vakuumpumpe 8 eingeschaltet sein. Weiters ist zweckmäßig in der Leitung 6 ein Wasserabscheider 8' vorgesehen, über welchen das in der Leitung 6 kondensierte Wasser abgeführt wird. Dadurch werden Beschädigungen des Abgasturboladers 7 und/oder der Brennkraftmaschine 1 durch das Kondenswasser verhindert.

Die in Fig. 2 dargestellte Vorrichtung 3 weist ein topfförmiges Gehäuse 9 auf, in dessen unterem Teil sich ein Raum befindet, der einen Filtereinsatz 11 aus faserigem Material enthält, der durch einen Filzpolster 12 abgedeckt ist. Oberhalb des Filzpolsters 12 ist eine Verdampfungsplatte 13 angeordnet, die an ihrer der Verdampfungskammer 4 zugewendeten Seite eine stufenförmige Oberfläche 14 aufweist. An der Oberseite der einzelnen Stufen münden die Verdampfungsplatte durchsetzende Kanäle 15, die im Bereich ihrer Mündung in der Verdampfungskammer 4 eine Erweiterung 16 aufweisen. Das topfförmige Gehäuse 9 ist durch einen Deckel 17 abgedeckt, der in geeigneter Weise mit dem Gehäuse 9 dicht verbunden ist.

Die Leitung 2, über welche das zu reinigende heiße Schmieröl von der Brennkraftmaschine 1 der erfindungsgemäßen Vorrichtung zugeführt wird, ist mit einer Leitung 23 verbunden, die spiralförmig in Ausnehmungen 24 an der Innenseite des Deckels 17 von der Peripherie ausgehend nach innen verläuft und schließlich über ein Rohr 25 in einen unterhalb des Filtereinsatzes 11 befindlichen Raum 26 gelangt, von welchem Raum 26 das zu reinigende Schmieröl zunächst den Filtereinsatz 11 sowie den Filzpolster 12 durchströmt und anschließend über die Kanäle 15 in der Verdampfungsplatte 13 in die Verdampfungskammer 4 gelangt. Die Erwärmung der Verdampfungskammer 4 erfolgt somit durch das erhebliche Temperaturen aufweisende, über die Leitung 2 zugeführte zu reinigende Schmieröl, welches beim Durchfließen der spiralförmigen Rohrleitung 23 seine Wärme an die Verdampfungskammer 4 abgibt. Falls de Wärmeinhalt des zu reinigenden Öles für die erforderliche Erwärmung der Verdampfungskammer 4 bzw. des darin befindlichen Öles nicht ausreicht, so können zusätzlich zur Rohrleitung 23 noch andere Heizmittel, z.B. elektrische Heizspiralen, vorgesehen sein.

Die in Fig. 2 dargestellte Vorrichtung arbeitet wie folgt:

Das zu reinigende heiße Schmieröl gelangt von der Leitung 2 über die an der Innenseite des Deckels 17 vorgesehene spiralförmige Leitung 23 und das Rohr 25 in den Raum 26 und durchdringt anschließend den Filtereinsatz 11 sowie den Filterpolster 12. Hierbei werden die festen Verunreinigungen zurückgehalten. Anschließend steigt das zu reinigende Schmieröl durch die Kanäle 15 in der Verdampfungsplatte 13 nach oben in die Verdampfungskammer 4, wobei es in den Erweiterungen der Kanäle 15 expandiert und hierdurch bereits eine teilweise Verdampfung der flüssigen oder flüchtigen Verunreinigungen erfolgt. Das Schmieröl breitet sich auf der stufenförmigen Oberfläche 14 der Verdampfungsplatte 13 aus und rinnt entlang der Stufen nach unten. Gleichzeitig wird es durch die heiße spiralförmige Leitung 23 erwärmt. Hiedurch erfolgt eine weitere Verdampfung der flüssigen und flüchtigen Verunreinigungen. Die bei dieser Verdampfung entstehenden Gase werden über die Leitung 6 abgeführt, das gereinigte Schmieröl gelangt über die Auslaßöffnung 21 in die Leitung 5, über welche es zur Ölwanne der Brennkraftmaschine 1 zurückgeführt wird.

Die Leitung 6 ist mit einer Vakuumeinrichtung verbunden, welche beispielsweise von der einen Unterdruck aufweisenden Luftansaugleitung des Abgasturboladers 7, von einer Vakuumpumpe 8 oder sowohl von der Luftansaugleitung des Turboladers 7 als auch von der Vakuumpumpe 8 gebildet sein kann. Ist kein Abgasturbolader 7 vorgesehen, so mündet die Leitung 6 in die Frischluftansaugleitung oder die Brennstoff-Luftgemisch-Ansaugleitung der Brennkraftmaschine 1, wo gleichfalls ein Unterdruck herrscht. Dadurch entsteht in der Verdampfungskammer 4 ein Unterdruck, wodurch eine raschere Verdampfung und damit eine vollständige Reinigung des Schmieröles erzielt wird.

Fig. 3 unterscheidet sich von der Ausführungsform nach Fig. 2 dadurch, daß die Rohrleitung 23 nicht an der der Verdampfungskammer 4 zugewendeten Oberseite des Deckels 17 angeordnet ist, also sich innerhalb der Verdampfungskammer befindet, sondern innerhalb des Deckels 17 vorgesehen ist. Der Deckel 17 besteht bei dieser Anordnung aus zwei Teilen 17' und 17'', wobei die Trennfuge 27 etwa durch die Mittellinie der Rohrleitung 23 verläuft, so daß die Rohrleitung 23 in eine untere Hälfte 23' und in eine obere Hälfte 23'' unterteilt ist. In der Trennfuge 27 befindet sich nun ein Filtersieb 28, vorzugsweise aus Metall, welches somit auch die Rohrleitung 23 unterteilt. Wird also das zu reinigende Öl über die Leitung 2 dem unteren Bereich 23' der Rohrleitung 23 zugeführt und vom oberen Bereich 23'' abgezogen, so erfolgt durch das Filtersieb 28 eine Reinigung des Schmieröles von festen Fremdstoffen wie Metallabrieb od. dgl.

Ein weiterer Unterschied gegenüber der Ausführungsform nach Fig. 2 ist darin gelegen, daß bei der Ausführungsform nach Fig. 3 die Rohrleitung 23 nicht über das Rohr 25 in den Raum 26 mündet, sondern über eine Leitung 29 mit der Ölwanne der Brennkraftmaschine 1 in Verbindung steht. In diese Leitung 29 ist jedoch ein Verzweigungsstück 30 eingeschaltet, das über eine Leitung 31 mit einer Einlaßöffnung 10 am Boden des topfförmigen Gehäuses 9 in Verbindung steht. Bei dieser Ausführungsform wird somit der Hauptstrom des lediglich durch das Filtersieb 28 gereinigten Öles unmittelbar zur Brennkraftmaschine 1 zurückgeführt, während ein Nebenstrom über die Leitung 31 in das Innere des topfförmigen Gehäuses gelangt und dort einer Reinigung ebenso wie bei der Ausführungsform nach Fig. 2 unterzogen wird. Das solcherart gereinigte, also auch von flüchtigen und flüssigen Verunreinigungen befreite Schmieröl, wird wieder über eine Leitung 33 zur Ölwanne der Brennkraftmaschine 1 zurückgeführt, die bei der Verdampfung der flüssigen und flüchtigen Verunreinigungen entstehenden Gase werden in der beschriebenen Weise über die Leitung 6, in welcher wieder eine Vakuumpumpe 8 und/oder ein Wasserabscheider 8' angeordnet sein kann, abgesaugt und in der Brennkraftmaschine 1 verbrannt.

**Patentansprüche**

1. Vorrichtung zur Beseitigung von Wasser und/oder anderen flüchtigen Verunreinigungen aus Schmierölen für Brennkraftmaschinen (1) mit einer in einen Raum mit einem Filtereinsatz (11) mündenden Einlaßöffnung für das zu reinigende Schmieröl, welches nach dem Hindurchströmen durch den Filtereinsatz in eine beheizte Verdampfungskammer (4) geleitet wird, die eine Auslaßöffnung (21) für das gereinigte Schmieröl sowie eine weitere Austrittsöffnung (22) für die bei der Verdampfung entstehenden Gase aufweist, welche weitere Austrittsöffnung (22) über eine Leitung (6) mit einer Vakuumeinrichtung in Verbindung steht, dadurch gekennzeichnet, daß die Einlaßöffnung für das zu reinigende Schmieröl mit einer Rohrleitung (23) in Verbindung steht, die in einer die Verdampfungskammer (4) begrenzenden Wand und/oder unmittelbar in der Verdampfungskammer (4) vorgesehen ist, so daß das von der Brennkraftmaschine (1) zurückströmende heiße, zu reinigende Schmieröl vor dem Eintreten in den den Filtereinsatz (11) enthaltenden Raum durch die Rohrleitung (23) strömt.

2. Vorrichtung nach Anspruch 1, dadurch gekennzeichnet, daß die Rohrleitung (23) in Form einer Spirale ausgebildet ist.

3. Vorrichtung nach Anspruch 1 oder 2, dadurch gekennzeichnet, daß die Rohrleitung (23) in einem die Verdampfungskammer (4) begrenzenden, aus zwei Teilen (23', 23'') bestehenden Deckel (23) angeordnet ist, wobei die Trennfuge (27) zwischen den beiden Teilen (23', 23'') etwa durch die Mittellinie der Rohrleitung (23) verläuft, und daß in dieser Trennfuge (27) ein mechanisches Filter (28), vorzugsweise ein Filtersieb, angeordnet ist.

4. Vorrichtung nach einem der Ansprüche 1 bis 3, dadurch gekennzeichnet, daß in die mit der weiteren Austrittsöffnung (22) verbundene Leitung ein Wasserabscheider (8') eingeschaltet ist.

**Claims**

1. A device for removing water and/or other volatile impurities from lubricating oils for internal combustion engines (1), having an inlet opening for the lubricating oil which is to be cleaned, which opening discharges into a space with a filter insert (11), and where the oil, after it has flowed through the filter insert, is conveyed into a heated evaporation chamber (4) having an outlet opening (21) for the cleaned lubricating oil and a further outlet opening (22) for the gases occurring during evaporation which is connected with a vacuum device via a duct (6), characterised in that the inlet opening for the lubricating oil to be cleaned is connected with a pipeline (23) which is provided in a wall limiting the evaporation chamber (4) and/or directly in the evaporation chamber (4), with the result that the hot lubricating oil to be cleaned, flowing back from the internal combustion engine (1), flows through the pipeline (23) before it enters the space containing the filter insert (11).

2. A device according to Claim 1, characterised in that the pipeline (23) is designed in the form of a spiral.

3. A device according to Claim 1 or 2, characterised in that the pipeline (23) is arranged in a cover (23) consisting of two parts (23', 23'') and limiting the evaporation chamber (4), the parting line (27) between the two parts (23', 23'') running more or less through the centre line of the pipeline (23), and in that a mechanical filter (28), preferably a gauze filter, is arranged in this parting line (27).

4. A device according to one of Claims 1 to 3, characterised in that a water separator (8') is interpolated into the duct connected with the further outlet opening (22).

**Revendications**

1. Dispositif pour enlever l'eau et/ou d'autres impuretés volatiles à partir d'huile de graissage pour machines à combustion interne (1) muni d'un orifice d'admission débouchant dans une chambre comportant un ensemble de filtres (11) pour l'huile de graissage à nettoyer, laquelle huile de graissage est amenée, après avoir traversé l'ensemble de filtres, dans une chambre d'évaporation chauffée (4), chambre qui comporte un orifice de sortie (21) pour l'huile de graissage nettoyée ainsi qu'un orifice de sortie supplémentaire (22) pour les gaz se produisant lors de l'évaporation, laquelle ouverture de sortie supplémentaire (22) est en communication via une conduite (6) avec une installation de vide, caractérisé en ce que l'ouverture d'admission pour l'huile de graissage à nettoyer est en liaison avec une conduite tubulaire (23) qui est prévue dans une paroi limitrophe de la chambre d'évaporation (4) et/ou directement dans la chambre d'évaporation (4) de sorte que l'huile de graissage chaude à nettoyer en retour de la machine à combustion interne (1) s'écoule avant l'entrée dans la chambre contenant l'ensemble de filtres (11) par la conduite tubulaire (23).

2. Dispositif selon la revendication 1, caractérisé en ce que la conduite tubulaire (23) est conçue sous forme d'une spirale.

3. Dispositif selon la revendication 1 ou 2, caractérisé en ce que la conduite tubulaire (23) est agencée dans un couvercle limitant la chambre d'évaporation (4), divisée en deux parties (23', 23") la ligne du joint de séparation entre les deux parties (23', 23") s'étendant sensiblement sur la ligne médiane de la conduite tubulaire (23) et en ce que dans ce joint de séparation (27) est agencé un filtre mécanique (28), de préférence un tamis de filtrage.

4. Dispositif selon l'une des revendications 1 à 3, caractérisé en ce que dans la conduite reliée avec l'ouverture de sortie supplémentaire (22) est intercalé un séparateur d'eau (8).

FIG. 1

FIG. 2

FIG.3